# EUROPÄISCHE PATENTSCHRIFT

(11) **EP 1 789 462 B1**
(45) Veröffentlichungstag und Bekanntmachung des Hinweises auf die Patenterteilung: **20.02.2008**
(21) Anmeldenummer: 05785644.5
(22) Anmeldetag: 02.09.2005
(51) Int. Cl.: C08F 290/06, C07C 69/54

(54) **VERFAHREN ZUR HERSTELLUNG VON (POLY-C2-C4-ALKYLENGLYKOL)-MONO(METH)ACRYLSÄUREESTERN**
METHOD FOR PRODUCING (POLY-C2-C4 ALKYLENE GLYCOL)-MONO(METH)ACRYLIC ESTERS
PROCEDE POUR PRODUIRE DES ESTERS D'ACIDE (POLY-C2-C4-ALKYLENEGLYCOL)-MONO(METH)ACRYLIQUE

(30) Priorität: 03.09.2004 DE 102004042799
(43) Veröffentlichungstag der Anmeldung: 30.05.2007
(73) Patentinhaber: BASF Aktiengesellschaft, 67056 Ludwigshafen (DE)
(72) Erfinder: BECKER, Stefan, 68167 Mannheim (DE); PASTRE, Jörg, 64625 Bensheim (DE); PAKUSCH, Joachim, 67346 Speyer (DE); GÖTZ, Thomas, 76774 Leimersheim (DE); BUREK, Arnold, 67071 Ludwigshafen (DE); HANSCH, Wolfgang, 67365 Schwegenheim (DE); SPILGER, Stefanie, 68723 Schwetzingen (DE)
(74) Vertreter: Reitstötter - Kinzebach
(86) Internationale Anmeldenummer: PCT/EP2005/009466
(87) Internationale Veröffentlichungsnummer: WO 2006/024538

(56) Entgegenhaltungen:
- EP-A- 0 670 341
- FR-A- 2 739 850
- US-A1- 2002 193 547
- US-B1- 6 383 279

## Beschreibung

Die vorliegende Erfindung betrifft ein Verfahren zur Herstellung von (Poly-C₂-C₄-alkylenglykol)-monoacrylsäureestern und -monomethacrylsäureestern, und ein Verfahren zur Herstellung von Copolymeren derartiger (Poly-C₂-C₄-alklenglykol)-mono(meth)acrylsäureester mit Acrylsäure oder Methacrylsäure.

Bei den Monoestern von Poly-C₂-C₄-alkylenglykolen mit Acrylsäure oder Methacrylsäure, im Folgenden auch als (Poly-C₂-C₄-alkylenglykol)-mono(meth)acrylsäureester bezeichnet, handelt es sich um interessante Makromonomere, die zur Herstellung von Kammpolymeren mit Poly-C₂-C₄-alkylenether-Seitenketten eingesetzt werden. Letztere finden aufgrund ihrer grenzflächenaktiven Eigenschaften in vielfältiger Weise Verwendung, beispielsweise als Waschmitteladditive wie Inkrustierungsinhibitoren, Vergrauungsinhibitoren und Soil-Release-Mittel, sowie als Lackrohstoffe, als Formulierungsadditive für Wirkstoffzubereitungen in der Medizin und im Pflanzenschutz.

Anionische Kammpolymere mit Poly-C₂-C₄-alkylenether-Seitenketten und Carboxylatgruppen am Polymerrückgrat, insbesondere solche mit C₁-C₁₀-Alkylpolyethylenglykolseitenketten finden beispielsweise als Fließmittel für mineralische Bindebaustoffe, insbesondere für zementhaltige Bindebaustoffe wie Mörtel, zementgebundene Putze und insbesondere Beton Verwendung.

Die Herstellung von (Poly-C₂-C₄-alkylenglykol)-mono(meth)acrylsäureestern erfolgt üblicherweise durch Derivatisierung eines OH-Gruppen tragenden Poly-C₂-C₄-alkylenglykols mit Acrylsäure oder Methacrylsäure oder einem esterbildenden Derivat davon. Aufgrund der makromolekularen Natur von Edukt und Endprodukt sind die Reaktionsgeschwindigkeiten derartiger Umsetzungen gering. Zudem ist eine Aufarbeitung und Isolierung der Reaktionsprodukte, nicht zuletzt auch aufgrund der grenzflächenaktiven Eigenschaften derartiger Substanzen problematisch, so dass eine selektive und weitgehend vollständige Umsetzung des Poly-C₂-C₄-alkylenglykols für die Qualität des erhaltenen Produkts notwendig ist.

Die DE-A 1110866 beschreibt u. a. die Umsetzung von Monoalkylpolyalkylenglykolen mit Säurechloriden ethylenisch ungesättigter Carbonsäuren, wobei das Säurechlorid im Überschuss eingesetzt wird. Das erhaltene Rohprodukt des Esters enthält naturgemäß noch nicht umgesetztes überschüssiges Säurechlorid, das in weiteren Umsetzungen stört und aufwendig durch Destillation entfernt werden muss. Die Qualität der so hergestellten (Poly-C₂-C₄-alkylenglykol)-mono(meth)acrylsäureester ist nicht zufriedenstellend.

Die US 4.075.411 beschreibt die Herstellung von Alkylphenoxy(polyethylenglykol)-monoestern olefinisch ungesättigter Carbonsäuren durch Veresterung von Polyethylenglykol-mono(alkylphenyl)ethern mit der entsprechenden Säure in Gegenwart von p-Toluolosulfonsäure oder durch Umsetzung mit dem Säurechlorid in Gegenwart eines Amins. Die erreichten Umsätze und die Qualität der so hergestellten Alkylphenoxy(polyethylenglykol)monoestern sind nicht zufriedenstellend .

Die WO 01/74736 beschreibt ein Verfahren zur Herstellung von Copolymeren von (Poly-C₂-C₄-alkylenglykol)-mono(meth)acrylsäureestern mit Acrylsäure oder Methacrylsäure durch Copolymerisation dieser Monomere, wobei die Herstellung der (Poly-C₂-C₄-alkylenglykol)-mono(meth)acrylsäureester durch Umsetzung von Polyalkylenglykolen mit (Meth)acrylsäureanhydriden in Gegenwart von Aminen erfolgt. Hierzu wird das Anhydrid im Überschuss von wenigstens 10 Mol-%, bezogen auf die Stöchiometrie der Reaktion eingesetzt. Trotz dieses Überschusses ist die Geschwindigkeit der Veresterung gering. Eigene Untersuchungen der Erfinder haben zudem gezeigt, dass die bei der Veresterung erreichten Umsätze gering sind und die so hergestellten Ester neben freiem Anhydrid auch noch beträchtliche Mengen an nicht abreagierten Polyalkylenglykolen enthalten, welche die Qualität der anschließend hergestellten Polymerisate, insbesondere im Hinblick auf ihre Verwendung als Betonfließmittel, nachteilig beeinflussen.

Der vorliegenden Erfindung liegt daher die Aufgabe zugrunde, ein Verfahren zur Herstellung von (Poly-C₂-C₄-alkylenglykol)-mono(meth)acrylsäureestern bereitzustellen, das diese Verbindungen in hoher Qualität und mit akzeptablen Umsatzgeschwindigkeiten liefert.

Es wurde überraschenderweise gefunden, dass diese Aufgabe gelöst werden kann durch ein Verfahren, bei dem man Acrylsäureanhydrid bzw. Methacrylsäureanhydrid mit einer wenigstens eine OH-Gruppe tragenden Poly-C₂-C₄-alkylenglykolverbindung in Gegenwart einer Base umsetzt, wobei die Base ausgewählt ist unter basischen Verbindungen, die bei 90 °C eine Löslichkeit von nicht mehr als 10 g/l aufweisen und wobei man (Meth)acrylsäureanhydrid A und Poly-C₂-C₄-alkylenglykolverbindung P in einem Molverhältnis A:P im Bereich von 1:1 bis 1,095:1 einsetzt.

Die vorliegende Erfindung betrifft daher ein Verfahren zur Herstellung von (Poly-C₂-C₄-alkylenglykol)-monoacrylsäureestern und -monomethacrylsäureestern durch Umsetzung von Acrylsäureanhydrid oder Methacrylsäureanhydrid (im Folgenden (Meth)acrylsäureanhydrid A) mit einer wenigstens eine OH-Gruppe tragenden Ploy-C₂-C₄-alkylenglykolverbindung P in Gegenwart einer Base, wobei die Base ausgewählt ist unter basischen Verbindungen, die bei 90 °C eine Löslichkeit in der Poly-C₂-C₄-alkylenglykolverbindung P von nicht mehr als 10 g/l aufweisen, und wobei das Molverhältnis von (Meth)acrylsäureanhydrid A zu Verbindung P (Molverhältnis A:P) im Bereich von 1:1 bis 1,095:1, vorzugsweise im Bereich von 1,005:1 bis 1,09:1, insbesondere im Bereich von 1,01:1 bis 1,085:1 und besonders bevorzugt im Bereich von 1,02:1 bis 1,08:1 liegt.

Das erfindungsgemäße Verfahren ist mit einer Reihe von Vorteilen verbunden. Zum einen läuft die Umsetzung des (Meth)acrylsäureanhydrids mit der Verbindung P deutlich rascher ab als bei den Verfahren des Standes der Technik, so dass für vergleichbare Umsätze deutlich kürzere Reaktionszeiten erforderlich sind. Zudem erreicht man höhere Umsätze. Es wurde zudem überraschenderweise gefunden, dass die Copolymerisate der so hergestellten Ester eine deutlich bessere verflüssigende Wirkung in zementhaltigen Bindebaustoffzubereitungen zeigen als vergleichbare Produkte des Standes der Technik.

Daher betrifft die vorliegende Erfindung auch ein Verfahren zur Herstellung von Copolymeren von (Meth)acrylsäure mit (Poly-C₂-C₄-alkylenglykol)-mono(meth)acrylsäureestern umfassend:
i) Herstellung eines (Poly-C₂-C₄-alkylenglykol)-mono(meth)acrylsäureesters durch Umsetzung von (Meth)acrylsäureanhydrid A mit einer wenigstens eine OH-Gruppe tragenden Poly-C₂-C₄-alkylenglykolverbindung P in Gegenwart einer Base nach erfindungsgemäßen Verfahren, und
ii) radikalische Copolymerisation des in Schritt i) erhaltenen (Poly-C₂-C₄-alkylenglykol)-mono(meth)acrylsäureesters mit Acrylsäure und/oder Methacrylsäure und gegebenenfalls weiteren ethylenisch ungesättigten Monomeren.

Die Erfindung betrifft außerdem die so hergestellten Copolymere und deren Verwendung als Betonfließmittel.

Unter Poly-C₂-C₄-alkylenglykolverbindungen P, die verschiedentlich auch als Poly-C₂-C₄-alkylenoxide oder Poly(oxy-C₂-C₄-alkylen)verbindungen bezeichnet werden, versteht man oligomere bzw. makromolekulare Polyether mit mehreren, in der Regel wenigstens 3, häufig wenigstens 5 und insbesondere wenigstens 10 und in der Regel nicht mehr als 400, häufig nicht mehr als 300, z. B. 10 bis 200 und insbesondere 10 bis 150 Wiederholungseinheiten, die von C₂-C₄-Alkylenglykolen abgeleitet sind. Diese Verbindungen können linear oder verzweigt sein und weisen in der Regel im Mittel wenigstens eine, üblicherweise endständige freie OH-Gruppe im Molekül auf. Die übrigen Endgruppen können beispielsweise OH-Gruppen, Alkyloxygruppen mit vorzugsweise 1 bis 10 C-Atomen, Phenyloxy- oder Benzyloxygruppen, Acyloxygruppen mit vorzugsweise 1 bis 10 C-Atomen, O-SO₃H-Gruppen oder O-PO₃H₂-Gruppen sein, wobei die beiden letztgenannten Gruppen auch als anionische Gruppen vorliegen können. In einer bevorzugten Ausführungsform setzt man eine Poly-C₂-C₄-alkylenglykolverbindung P ein, in der eine Endgruppe eine OH-Gruppe ist und die weitere(n) Endgruppe(n) Alkyloxygruppe(n) mit 1 bis 10 und insbesondere mit 1 bis 4 C-Atomen wie Ethoxy, n-Propoxy, Isopropoxy, n-Butoxy, 2-Butoxy oder tert.-Butoxy und speziell Methoxy ist (sind).

Bevorzugt sind lineare Poly-C₂-C₄-alkylenglykolverbindungen mit etwa einer freien OH-Gruppe je Molekül (d.h. etwa 0,9 bis 1,1 freie OH-Gruppen im Mittel). Derartige Verbindungen lassen sich durch die allgemeine Formel P beschreiben:

HO-(A-O)ₙ-R¹ (P)

worin n die Anzahl der Wiederholungseinheiten angibt und in der Regel für eine Zahl im Bereich von 3 bis 400, insbesondere im Bereich von 5 bis 300, besonders bevorzugt im Bereich von 10 bis 200 und ganz besonderes bevorzugt im Bereich von 10 bis 150 steht,
- A: für C₂-C₄-Alkylen wie 1,2-Ethandiyl, 1,3-Propandiyl, 1,2-Propandiyl, 1,2-Butandiyl oder 1,4-Butandiyl steht, und
- R¹: Wasserstoff, Alkyl mit vorzugsweise 1 bis 10 und insbesondere 1 bis 4 C-Atomen, Phenyl, Benzyl, Acyl (= C(O)-Alkyl) mit vorzugsweise 1 bis 10 C-Atomen, SO₃H-Gruppen oder PO₃H₂, insbesondere C₁-C₁₀-Alkyl und besonders bevorzugt C₁-C₄-Alkyl und speziell Methyl oder Ethyl bedeutet.

Insbesondere ist das erfindungsgemäße Verfahren zur Herstellung von (Poly-C₂-C₄-alkylenglykol)-mono(meth)acrylsäureestern geeignet, worin wenigstens 50 Gew.%, vorzugsweise wenigstens 70 Gew.-%, insbesondere wenigstens 90 Gew.-% und speziell alle der Wiederholungseinheiten in der eingesetzten Poly-C₂-C₄-alkylenglykolverbindung P von Glykol bzw. von Ethylenoxid abgeleitet sind. Dementsprechend stehen vorzugsweise wenigstens 50 Gew.%, insbesondere wenigstens 70 Gew.%, ganz besonders bevorzugt wenigstens 90 Gew.% und speziell alle der Einheiten A-O in Formel P für CH₂-CH₂-O. Derartige Poly-C₂-C₄-alkylenglykole P sind auch im Hinblick auf die Verwendung der (Poly-C₂-C₄-alkylenglykol)-mono(meth)acrylsäureester zur Herstellung von Fließmitteln für zementhaltige Zubereitungen bevorzugt. Nicht zuletzt im Hinblick auf diese Verwendung steht R¹ in Formel P vorzugsweise für eine Alkylgruppe mit 1 bis 10 und insbesondere mit 1 bis 4 C-Atomen und speziell für Methyl.

Dementsprechend betrifft eine ganz besonders bevorzugte Ausführungsform der Erfindung ein Verfahren, bei dem die Verbindung P ein Polyethylenglykolmono(C₁-C₁₀-alkyl)ether, also ein Mono-C₁-C₁₀-alkylether, insbesondere ein Mono-C₁-C₄-alkylether und speziell der Methyl- oder Ethylether eines linearen Polyethylenglykols ist.

Vorzugsweise weist die eingesetzte Poly-C₂-C₄-alkylenglykolverbindung P ein zahlenmittleres Molekulargewicht (bestimmt mittels GPC) im Bereich von 250 bis 20000 auf und insbesondere im Bereich von 400 bis 10000 auf.

Erfindungsgemäß setzt man zur Herstellung des (Poly-C₂-C₄-alkylenglykol)mono-(meth)acrylsäureesters die Poly-C₂-C₄-alkylenglykolverbindung P mit wenigstens einem Moläquivalent Acrylsäureanhydrid oder Methacrylsäureanhydrid oder einer Mischung davon um. Der Ausdruck (Meth)acrylsäureanhydrid bezeichnet hier und im Folgenden sowohl Acrylsäureanhydrid oder Methacrylsäureanhydrid als auch deren Mischungen. (Meth)acrylsäureanhydrid kann auch in einem geringen Überschuss eingesetzt werden, der jedoch 9,5 Mol-%, vorzugsweise 9 Mol-%, insbesondere 8,5 Mol-%, und speziell 8 Mol-%, bezogen auf 1 Mol Verbindung P nicht überschreiten wird, d. h. die Menge an (Meth)acrylsäureanhydrid beträgt erfindungsgemäß maximal 1,095 Mol, vorzugsweise nicht mehr als 1,09 Mol, insbesondere nicht mehr als 1,085 Mol und speziell nicht mehr als 1,08 Mol pro Mol Verbindung P. Vorzugsweise setzt man wenigstens 1,005 Mol, insbesondere wenigstens 1,01 Mol und besonders bevorzugt wenigstens 1,02 Mol (Meth)acrylsäureanhydrid pro Mol Verbindung P ein.

Erfindungsgemäß erfolgt die Umsetzung in Gegenwart einer Base, die in der Verbindung P bei 90 °C nicht oder nur geringfügig löslich ist, d. h. die Löslichkeit der Base in der Verbindung P beträgt bei 90 °C nicht mehr als 10 g/l und insbesondere nicht mehr als 5 g/l.

Zu den Beispielen für erfindungsgemäß geeignete Basen zählen Hydroxide, Oxide, Carbonate und Hydrogencarbonate von ein- oder zweiwertigen Metallkationen, insbesondere von Elementen der ersten und zweiten Hauptgruppe des Periodensystems, d. h. von Li⁺, Na⁺, K⁺, Rb⁺, Cs⁺, Be²⁺, Mg²⁺, Ca²⁺, Sr²⁺ und Ba²⁺ sowie von ein- oder zweiwertigen Übergangsmetallkationen wie Ag⁺, Fe²⁺, Co²⁺, Ni²⁺, Cu²⁺, Zn²⁺, Cd²⁺, Sn²⁺, Pb²⁺ und Ce²⁺. Bevorzugt sind die Hydroxide, Oxide, Carbonate und Hydrogencarbonate von Kationen der Alkali und Erdalkalimetalle sowie von Zn²⁺ und insbesondere von Mg²⁺ oder Ca²⁺ und besonders bevorzugt von Na⁺ oder K⁺. Hierunter bevorzugt sind die Hydroxide und Carbonate dieser Metallionen, insbesondere die Alkalimetallcarbonate und Alkalimetallhydroxide und speziell Natriumcarbonat, Kaliumcarbonat, Kaliumhydroxid und Natriumhydroxid. Geeignet ist insbesondere auch Lithiumhydroxid und Lithiumcarbonat. Die Base wird vorzugsweise in einer Menge von 0,05 bis 0,5 Basenäquivalenten und insbesondere in einer Menge von 0,1 bis 0,4 Basenäquivalenten, bezogen auf die Poly-C₂-C₄-alkylenglykolverbindung P eingesetzt, wobei größere Basenmengen, z. B. bis 1 Basenäquivalent, in der Regel nicht von Nachteil sind. Hierbei ist zu berücksichtigen, dass bei Hydroxiden und Hydrogencarbonaten die Basenäquivalenten den eingesetzten Moläquivalenten entsprechen, wohingegen 1 Moläquivalent eines Carbonats oder Oxids jeweils 2 Basenäquivalenten entspricht.

Die Umsetzung des Anhydrids mit der Verbindung P erfolgt bevorzugt bei Temperaturen im Bereich von 0 bis 150 °C, insbesondere im Bereich von 20 bis 130 °C und besonders bevorzugt im Bereich von 50 bis 100 °C. Der bei der Umsetzung herrschende Druck ist für den Erfolg der Reaktion von untergeordneter Bedeutung und liegt in der Regel im Bereich von 800 mbar bis 2 bar und häufig bei Umgebungsdruck. Vorzugsweise führt man die Umsetzung in einer Inertgasatmosphäre durch. Die Umsetzung des Anhydrids mit der Verbindung P kann in allen für derartige Umsetzungen üblichen Apparaturen durchgeführt werden, z. B. in einem Rührkessel, in Rührkesselkaskaden, Autoklaven, Rohrreaktoren oder Knetern.

Vorzugsweise führt man die Umsetzung des Anhydrids mit der Verbindung P solange durch, bis ein Umsatz der eingesetzten Verbindung P von wenigstens 80 %, insbesondere wenigstens 90 % und besonders bevorzugt wenigstens 95 % erreicht ist. Die hierfür erforderlichen Reaktionszeiten werden in der Regel 5 h nicht überschreiten und betragen häufig weniger als 4 h. Der Umsatz kann durch ¹H-NMR-Spektorskopie der Reaktionsmischung, vorzugsweise in Gegenwart einer starken Säure wie Trifluoressigsäure verfolgt werden.

Die Umsetzung des Anhydrids mit der Verbindung P kann in Masse, d. h. ohne Zusatz von Lösungsmitteln, oder in inerten Lösungs- oder Verdünnungsmitteln durchgeführt werden. Inerte Lösungsmittel sind in der Regel aprotische Verbindungen. Zu den inerten Lösungsmitteln zählen gegebenenfalls halogenierte aromatische Kohlenwasserstoffe wie Toluol, o-Xylol, p-Xylol, Cumol, Chlorbenzol, Ethylbenzol, technische Mischungen von Alkylaromaten, aliphatische sowie cycloaliphatische Kohlenwasserstoffe wie Hexan, Heptan, Octan, Isooctan, Cyclohexan, Cycloheptan, technische Aliphatenmischungen, weiterhin Ketone wie Aceton, Methylethylketon, Cyclohexanon, weiterhin Ether wie Tetrahydrofuran, Dioxan, Diethylether, tert.-Butylmethylether, sowie Mischungen der vorgenannten Lösungsmittel wie z. B. Toluol/Hexan. Vorzugsweise wird ohne Lösungsmittel oder nur mit sehr geringen Lösungsmittelmengen, in der Regel weniger als 10 Gew.-%, bezogen auf die Einsatzstoffe, d. h. in Substanz, gearbeitet.

Es hat sich als vorteilhaft erwiesen, wenn man die Umsetzung des Anhydrids mit der Verbindung P in einem Reaktionsmedium durchführt, das weniger als 0,2 Gew.-% und insbesondere weniger als 1000 ppm Wasser enthält (bestimmt durch Karl-Fischer-Titration). Der Begriff "Reaktionsmedium" bezieht sich auf die Mischung der Reaktanden A und P mit der Base sowie mit gegebenenfalls eingesetztem Lösungsmittel und Inhibitor. Im Falle von feuchtigkeitshaltigen Einsatzmaterialien hat es sich bewährt, das Wasser vor der Umsetzung zu entfernen, z. B. durch Destillation und besonders bevorzugt durch Destillation unter Zusatz eines organischen Lösungsmittels, das mit Wasser ein tiefsiedendes Azeotrop bildet. Beispiele für derartige Lösungsmittel sind die zuvor genannten aromatischen Lösungsmittel wie Toluol, o-Xylol, p-Xylol, Cumol, Benzol, Chlorbenzol, Ethylbenzol und technische Aromatenmischungen, weiterhin aliphatische und cycloaliphatische Lösungsmittel wie Hexan, Heptan, Cyclohexan sowie technische Aliphatenmischungen und Mischungen der vorgenannten Lösungsmittel.

Zur Umsetzung wird man üblicherweise so vorgehen, dass man die Reaktionsmischung, enthaltend die Verbindung P, das Anhydrid und die Base und gegebenenfalls Lösungsmittel und gegebenenfalls Inhibitor in einem geeigneten Reaktionsgefäß bei den oben angegebenen Temperaturen zur Reaktion bringt. Vorzugsweise legt man die Verbindung P und die Base sowie gegebenenfalls das Lösungsmittel vor und gibt hierzu das Anhydrid. Vorzugsweise erfolgt die Zugabe des Anhydrids bei Reaktionstemperatur.

Sofern die Einsatzstoffe Wasser enthalten, wird man das Wasser vorzugsweise vor der Zugabe des Anhydrids entfernen. Beispielsweise kann man so vorgehen, dass man die Verbindung P und die Base sowie gegebenenfalls das Lösungsmittel in einem Reaktionsgefäß vorlegt, anschließend eventuell vorhandene Feuchtigkeit in der oben beschriebenen Weise entfernt und dann das Anhydrid, vorzugsweise bei Reaktionstemperatur, zugibt.

Außerdem hat es sich zur Vermeidung einer unkontrollierten Polymerisation bewährt, die Umsetzung des Anhydrids mit der Verbindung P in Gegenwart eines Polymerisationsinhibitors durchzuführen. Geeignet sind die für derartige Umsetzungen bekannten Polymerisationsinhibitoren, insbesondere Phenole wie Hydrochinon, Hydrochinonmonomethylether, speziell sterisch gehinderte Phenole wie 2,6-Di-tert.-butylphenol oder 2,6-Di-tert.-butyl-4-methylphenol, weiterhin Thiazine wie Phenothiazin oder Methylenblau, Cer(III)salze wie Cer(III)acetat sowie Nitroxide, insbesondere sterisch gehinderte Nitroxide, d. h. Nitroxide sekundärer Amine, die an den C-Atomen, welche der Nitroxidgruppe benachbart sind, jeweils 3 Alkylgruppen tragen, wobei je 2 dieser Alkylgruppen, insbesondere solche, die sich nicht am gleichen C-Atom befinden, mit dem Stickstoffatom der Nitroxidgruppe bzw. dem Kohlenstoffatom, an das sie gebunden sind, einen gesättigten 5- oder 6-gliedrigen Ring bilden, wie beispielsweise in 2,2,6,6-Tetramethylpiperidin-1-oxyl (TEMPO) oder 4-Hydroxy-2,2,6,6-tetramethylpiperidin-1-oxyl (OH-TEMPO), Mischungen der vorgenannten Inhibitoren, Mischungen der vorgenannten Inhibitoren mit Sauerstoff, z.B. in Form von Luft, und Mischungen von Mischungen der vorgenannten Inhibitoren mit Sauerstoff, z. B. in Form von Luft. Bevorzugte Inhibitoren sind die vorgenannten sterisch gehinderten Nitroxide, Cer(III)verbindungen und sterisch gehinderte Phenole und deren Mischungen untereinander sowie Mischungen derartiger Inhibitoren mit Sauerstoff und Mischungen von Mischungen dieser Inhibitoren mit Sauerstoff, z. B. in Form von Luft. Besonders bevorzugt sind Inhibitorsysteme, die wenigstens ein sterisch gehindertes Nitroxid und eine weitere Komponente, ausgewählt unter einem sterisch gehinderten Phenol und einer Cer(III)verbindung umfassen, sowie deren Mischungen mit Sauerstoff, z. B. in Form von Luft. Die Menge an Inhibitor kann bis zu 2 Gew.-%, bezogen auf die Gesamtmenge an Anhydrid + Verbindung P, betragen. Die Inhibitoren werden vorteilhafterweise in Mengen von 10 ppm bis 1000 ppm, bezogen auf die Gesamtmenge an Anhydrid + Verbindung P eingesetzt. Im Falle von Inhibitormischungen beziehen sich diese Angaben auf die Gesamtmenge der Komponenten, mit Ausnahme von Sauerstoff.

Die erfindungsgemäße Umsetzung der Verbindung P mit (Meth)acrylsäureanhydrid führt naturgemäß primär zu einer Mischung des (Poly-C₂-C₄-alkylenglykol)mono-(meth)acrylsäureesters mit Acrylsäure oder Methacrylsäure und gegebenenfalls Resten an überschüssigem Anhydrid und nicht abreagiertem Poly-C₂-C₄-alkylenglykol P.

Das überschüssige Anhydrid macht jedoch in der Regel nicht mehr als 10 Gew.%, und insbesondere nicht mehr als 5 Gew.-% der ursprünglich eingesetzten Menge an (Meth)acrylsäureanhydrid A aus. Es hat sich bewährt, eventuell vorhandenes Anhydrid durch Umsetzung mit Wasser zu zerstören. Der Anteil an nicht abreagierter Poly-C₂-C₄-alkylenglykolverbindung P beträgt vorzugsweise nicht mehr als 10 Gew.% und insbesondere nicht mehr als 5 Gew.-% der eingesetzten Menge an Verbindung P.

Zur Trennung des (Poly-C₂-C₄-alkylenglykol)mono(meth)acrylsäureesters von der bei der Reaktion gebildeten Acrylsäure bzw. Methacrylsäure kann man letztere grundsätzlich auf destillativem Wege oder in sonstiger Weise, z. B. durch Extraktion der Säure, entfernen. Auch kann man den Ester isolieren, z. B. durch Kristallisation des Esters, aus einem wässrigen Medium, wobei die Säure und gegebenenfalls vorhandenes Anhydrid in der Mutterlauge verbleibt. In der Regel wird man jedoch keine Isolierung oder Abtrennung des (Poly-C₂-C₄-alkylenglykol)mono(meth)acrylsäureesters vornehmen. Vielmehr wird man vorzugsweise die Mischung aus (Poly-C₂-C₄-alkylenglykol)mono-(meth)acrylsäurester mit Acrylsäure und/oder Methacrylsäure, gegebenenfalls unter Zusatz weiterer Acrylsäure und/oder Methacrylsäure und gegebenenfalls weiteren ethylenisch ungesättigten Monomeren, einer radikalischen Copolymerisation unterwerfen.

Im Hinblick auf die Verwendung der bei dem erfindungsgemäßen Polymerisationsverfahren erhältlichen Copolymere wird man in der erfindungsgemäß zu polymerisierenden Monomermischung vorzugsweise ein Molverhältnis von (Poly-C₂-C₄-alkylenglykol)-mono(meth)acrylsäureester zu (Meth)acrylsäure im Bereich von 1:1 bis 1:20 und insbesondere im Bereich von 1:1 bis 1:8 einstellen.

Neben den vorgenannten Monomeren kann die im erfindungsgemäßen Verfahren zu polymerisierende Monomermischung auch weitere, von den vorgenannten Monomeren verschiedene Monomere enthalten. Hierzu zählen insbesondere monoethylenisch ungesättigte Monomere (Monomere C). Beispiele hierfür sind
- C1: monoethylenisch ungesättigte Mono- und Dicarbonsäuren mit 3 bis 8 C-Atomen wie Crotonsäure, Isocrotonsäure, Maleinsäure, Fumarsäure und Itaconsäure,
- C2: Alkylester monoethylenisch ungesättigter Mono- und Di-C₃-C₈-carbonsäuren, insbesondere der Acrylsäure und der Methacrylsäure mit C₁-C₁₀-Alkanolen oder C₃-C₁₀-Cyctoalkanolen wie Methylacrylat, Ethylacrylat, n-Propylacrylat, iso-Propylacrylat, n-Butylacrylat, iso-Butylacrylat, tert.-Butylacrylat, n-Hexylacrylat, 2-Ethylhexylacrylat, Cyclohexylacrylat und die entsprechenden Methacrylsäureester,
- C3: Hydroxyalkylester monoethylenisch ungesättigter Mono- und Di-C₃-C₈-carbonsäuren, insbesondere der Acrylsäure und der Methacrylsäure wie 2-Hydroxyethylacrylat, 3-Hydroxypropylacrylat, 4-Hydroxybutylacrylat, 2-Hydroxyethylmethacrylat, 3-Hydroxypropylmethacrylat und 4-Hydroxybutylmethacrylat,
- C4: monoethylenisch ungesättigte Nitrile wie Acrylnitril,
- C5: vinylaromatische Monomere wie Styrol und Vinyltoluole,
- C6: monoethylenisch ungesättigte Sulfonsäuren und Phosphonsäuren und deren Salze, insbesondere deren Alkalimetallsalze wie Vinylsulfonsäure, Allylsulfonsäure, Methallylsulfonsäure, Styrolsulfonsäure, 2-Acryloxyethansulfonsäure, 2-Acrylamido-2-methylpropansulfonsäure, Vinylphosphonsäure, Allylphosphonsäure, 2-Acryloxyethanphosphonsäure, 2-Acrylamido-2-methylpropanphosphonsäure, sowie
- C7: Aminogruppen-tragende Monomere und deren Protonierungs- und deren Quaternierungsprodukte wie [2-(N,N-Dimethylamino)ethyl]acrylat, [2-(N,N-Dimethylamino)ethyl]methacrylat, [3-(N,N-Dimethylamino)propyl]acrylat, [2-(N, N-Dimethylamino)propyl]methacrylat, [2-(N,N,N-Trimethylammonium)ethyl]acrylat, [2-(N,N,N-Trimethylammonium)ethyl]methacrylat,
[3-(N,N,N-Trimethylammonium)propyl]acrylat, [2-(N,N,N-Trimethylammonium)propyl]methacrylat in Form ihrer Chloride, Sulfate und Methosulfate.

Bevorzugte Monomere C sind die Monomere C1, C3 und C6. DerAnteil monoethylenisch ungesättigter Monomere an der Gesamtmenge der zu polymerisierenden Monomere wird in der Regel 30 Gew.-% und insbesondere 10 Gew.-% nicht überschreiten. In einer besonders bevorzugten Ausführungsform setzt man keine oder weniger als 1 Gew.-%, bezogen auf die Gesamtmenge der zu polymerisierenden Monomere C ein.

Außerdem kann es zur Erhöhung des Molekulargewichts der Polymerisate zweckmäßig sein, die Copolymerisation in Gegenwart von geringen Mengen an mehrfach ethylenisch ungesättigten Monomeren mit z. B. 2, 3 oder 4 polymerisierbaren Doppelbindungen durchzuführen (Vernetzer). Beispiele hierfür sind Diester und Triester ethylenisch ungesättigter Carbonsäuren, insbesondere die Bis- und Trisacrylate von Diolen oder Polyolen mit 3 oder mehr OH-Gruppen, z. B. die Bisacrylate und die Bismethacrylate von Ethylenglykol, Diethylenglykol, Trietylenglykol, Neopentylglykol oder Polyethylenglykolen. Derartige Vernetzer werden, sofern erwünscht, in einer Menge von in der Regel 0,01 bis 5 Gew.-%, bezogen auf die Gesamtmenge der zu polymerisierenden Monomere, eingesetzt. Vorzugsweise werden weniger als 0,01 Gew.% und insbesondere keine Vernetzermonomere eingesetzt.

Die erfindungsgemäße Copolymerisation von (Poly-C₂-C₄-alkylenglykol)mono(meth)acrylsäurester mit Acrylsäure und/oder Methacrylsäure und gegebenenfalls weiteren Monomeren erfolgt üblicherweise in Gegenwart von Radikale bildenden Verbindungen, so genannten Initiatoren. Die Initiatoren werden üblicherweise in Mengen bis zu 30 Gew.-%, vorzugsweise 0,05 bis 15 Gew.-%, insbesondere 0,2 bis 8 Gew.%, bezogen auf die zu polymerisierenden Monomere, eingesetzt. Bei aus mehreren Bestandteilen bestehenden Initiatoren (Initiatorsysteme, z. B. bei Redox-Initiatorsystemen) beziehen sich die vorstehenden Gewichtsangaben auf die Summe der Komponenten.
Geeignete Initiatoren sind beispielsweise organische Peroxide und Hydroperoxide, weiterhin Peroxodisulfate, Percarbonate, Peroxidester, Wasserstoffperoxid und Azoverbindungen. Beispiele für Initiatoren sind Wasserstoffperoxid, Dicyclohexylperoxidicarbonat, Diacetylperoxid, Di-tert.-butylperoxid, Diamylperoxid, Dioctanoylperoxid, Didecanoylperoxid, Dilauroylperoxid, Dibenzoylperoxid, Bis(o-toluyl)peroxid, Succinylperoxid, Methylethylketonperoxid, Di-tert.-Butylhydroperoxid, Acetylacetonperoxid, Butylperacetat, tert.-Butylpermaleinat, tert.-Butylperisobutyrat, tert.-Butylperpivalat, tert.-Butylperoctoat, tert.-Butylperneodecanoat, tert.-Butylperbenzoat, tert.-Butylhydroperoxid, Cumolhydroperoxid, tert.-Butylperneodecanoat, tert.-Amylperpivalat, tert.-Butylperpivalat, tert.-Butyl-perbenzoat, tert.-Butylperoxi-2-ethylhexanoat und Düsopropylperoxidicarbamat; weiterhin Lithium-, Natrium-, Kalium- und Ammoniumperoxodisulfat, Azoinitiatoren 2,2'-Azobis-isobutyronitril, 2,2'-Azobis(2-methylbutyronitril), 2,2'-Azobis[2-methyl-N-(-2-hydroxyethyl)proplonamid, 1,1'-Azobis(1-cyclohexancarbonitril), 2,2'-Azobis(2,4-dimethylvaleronitril), 2,2'-Azobis(N,N'-dimethylenisobutyroamidin)dihydrochlorid, und 2,2'-Azobis(2-amidinopropan)dihydrochlorid, sowie die im Folgenden erläuterten Redox-Initiatorsysteme.

Redox-Initiatorsysteme enthalten mindestens eine peroxidhaltige Verbindung in Kombination mit einem Redox-Coinitiator, z. B. eine reduzierend wirkende Schwefelverbindung, z. B. Bisulfite, Sulfite, Thiosulfate, Dithionite und Tetrathionate von Alkalimetallen oder von Ammoniumverbindungen. So kann man Kombinationen von Peroxodisulfaten mit Alkalimetall- oder Ammoniumhydrogensulfiten einsetzen, z. B. Ammoniumperoxodisulfat und Ammoniumdisulfit. Die Menge der peroxidhaltigen Verbindung zum Redox-Coinitiator beträgt 30:1 bis 0,05:1.

Die Initiatoren können allein oder in Mischung untereinander angewendet werden, z. B. Mischungen aus Wasserstoffperoxid und Natriumperoxodisulfat.

Die Initiatoren können sowohl wasserlöslich als auch in Wasser nicht oder nur geringfügig löslich sein. Für die Polymerisation in wässrigem Medium werden bevorzugt wasserlösliche Initiatoren eingesetzt, d. h. Initiatoren, die in der zur Polymerisation üblicherweise eingesetzten Konzentration im wässrigen Polymerisationsmedium löslich sind. Hierzu zählen Peroxodisulfate, Azoinitiatoren mit ionischen Gruppen, organische Hydroperoxide mit bis zu 6 C-Atomen, Acetonhydroperoxid, Methylethylketonhydroperoxid und Wasserstoffperoxid, sowie die vorgenannten Redoxinitiatoren.

In Kombination mit den Initiatoren bzw. den Redoxinitiatorsystemen können zusätzlich Übergangsmetallkatalysatoren eingesetzt werden, z. B. Salze von Eisen, Kobalt, Nickel, Kupfer, Vanadium und Mangan. Geeignete Salze sind z. B. Eisen(II)sulfat, Kobalt(II)chlorid, Nickel(II)sulfat oder Kupfer(I)chlorid. Bezogen auf die Monomeren wird das reduzierend wirkende Übergansmetallsalz in einer Konzentration von 0,1 ppm bis 1000 ppm eingesetzt. So kann man Kombinationen von Wasserstoffperoxid mit Eisen(II)-Salzen einsetzen, wie beispielsweise 0,5 bis 30 % Wasserstoffperoxid und 0,1 bis 500 ppm Mohrsches Salz.

Auch bei der erfindungsgemäßen Copolymerisation in organischen Lösungsmitteln können in Kombination mit den oben genannten Initiatoren Redox-Coinitiatoren und/oder Übergangsmetallkatalysatoren mitverwendet werden, z. B. Benzoin, Dimethylanilin, Ascorbinsäure sowie in organischen Lösungsmitteln lösliche Komplexe von Schwermetallen, wie Kupfer, Cobalt, Eisen, Mangan, Nickel und Chrom. Die üblicherweise verwendeten Mengen an Redox-Coinitiatoren bzw. Obergangsmetalikatalysatoren betragen etwa 0,1 bis 1000 ppm, bezogen auf die eingesetzten Mengen an Monomeren.

Um das mittlere Molekulargewicht der erfindungsgemäß erhältlichen Polymerisate zu kontrollieren, ist es oft zweckmäßig, die erfindungsgemäße Copolymerisation in Gegenwart von Reglern durchzuführen. Hierfür können übliche Regler verwendet werden, insbesondere organische SH-Gruppen enthaltende Verbindungen, insbesondere wasserlösliche SH-Gruppen enthaltende Verbindungen wie 2-Mercaptoethanol, 2-Mercaptopropanol, 3-Mercaptopropionsäure, Cystein, N-Acetylcystein, weiterhin Phosphor(III)- oder Phosphor(1)-Verbindungen wie Alkalimetall- oder Erdalkalimetallhypophosphite, z. B. Natriumhypophosphit, sowie Hydrogensulfite wie Natriumhydrogensulfit. Die Polymerisationsregler werden im Allgemeinen in Mengen von 0,05 bis 10 Gew.-%, insbesondere 0,1 bis 2 Gew.-%, bezogen auf die Monomere, eingesetzt. Bevorzugte Regler sind die vorgenannten SH-Gruppen tragenden Verbindungen, insbesondere wasserlösliche SH-Gruppen tragende Verbindungen wie 2-Mercaptoethanol, 2-Mercaptopropanol, 3-Mercaptopropionsäure, Cystein und N-Acetylcystein. Bei diesen Verbindungen hat es sich besonders bewährt, diese in einer Menge von 0,05 bis 2 Gew.-%, insbesondere 0,1 bis 1 Gew.-%, bezogen auf die Monomere einzusetzen. Die vorgenannten Phosphor(III)- und Phosphor(I)-Verbindungen sowie die Hydrogensulfite wird man üblicherweise in größeren Mengen, z. B. 0,5 bis 10 Gew.-% und insbesondere 1 bis 8 Gew.-%, bezogen auf die zu polymerisierenden Monomere einsetzen. Auch durch die Wahl des geeigneten Lösungsmittels kann auf das mittlere Molekulargewicht Einfluss genommen werden. So führt die Polymerisation in Gegenwart von Verdünnungsmitteln mit benzylischen oder allylischen H-Atomen zu einer Verringerung des mittleren Molekulargewichtes durch Kettenübertragung.

Die erfindungsgemäße Copolymerisation von (Poly-C₂-C₄-alkylenglykol)-mono(meth)-acrylsäurester mit Acrylsäure und/oder Methacrylsäure kann nach den üblichen Polymerisationsverfahren erfolgen, einschließlich Lösungs-, Fällungs-, Suspensions- oder Substanzpolymerisation erfolgen. Bevorzugt ist die Methode der Lösungspolymerisation, d. h. die Polymerisation in Lösungs- oder Verdünnungsmitteln.

Zu den geeigneten Lösungs- oder Verdünnungsmitteln zählen sowohl aprotische Lösungsmittel, z. B. die vorgenannten Aromaten wie Toluol, o-Xylol, p-Xylol, Cumol, Chlorbenzol, Ethylbenzol, technischen Mischungen von Alkylaromaten, Aliphaten und Cycloaliphaten wie Cyclohexan und technischen Aliphatenmischungen, Ketone wie Aceton, Cyclohexanon und Methylethylketon, Ether wie Tetrahydrofuran, Dioxan, Diethylether, tert.-Butylmethylether, und C₁-C₄-Alkylester aliphatischer C₁-C₄-Carbonsäuren wie Essigsäuremethylester und Essigsäureethylester, weiterhin protische Lösungsmittel wie Glykole und Glykolderivate, Polyalkylenglykole und deren Derivate, C₁-C₄-Alkanole, z. B. n-Propanol, n-Butanol, Isopropanol, Ethanol oder Methanol, sowie Wasser und Mischungen von Wasser mit C₁-C₄-Alkanolen wie z. B. Isopropanol/Wasser-Mischungen. Vorzugsweise erfolgt das erfindungsgemäße Copolymerisationsverfahren in Wasser oder einer Mischung aus Wasser mit bis zu 60 Gew.-% an C₁-C₄-Alkanolen oder Glykolen als Lösungs- oder Verdünnungsmittel. Besonders bevorzugt wird Wasser als alleiniges Lösungsmittel eingesetzt.

Das erfindungsgemäße Copolymerisationsverfahren wird bevorzugt unter weitgehendem oder vollständigem Ausschluss von Sauerstoff, vorzugsweise in einem Inertgasstrom, z. B. einem Stickstoffstrom, durchgeführt.

Das erfindungsgemäße Copolymerisationsverfahren kann in den für Polymerisationsmethoden üblichen Apparaturen durchgeführt werden. Hierzu zählen Rührkessel, Rührkesselkaskaden, Autoklaven, Rohrreaktoren und Kneter.

Das erfindungsgemäße Copolymerisationsverfahren erfolgt üblicherweise bei Temperaturen im Bereich von 0 bis 300 °C, vorzugsweise im Bereich von 40 bis 120 °C. Die Polymerisationsdauer liegt üblicherweise im Bereich von 0,5 h bis 15 h und insbesondere im Bereich von 2 bis 6 h. Der bei der Polymerisation herrschende Druck ist für den Erfolg der Polymerisation von untergeordneter Bedeutung und liegt in der Regel im Bereich von 800 mbar bis 2 bar und häufig bei Umgebungsdruck. Bei Einsatz leichtflüchtiger Lösungsmittel oder leichtflüchtiger Monomere kann der Druck auch höher sein.

Je nach Wahl der Polymerisationsbedingungen weisen die erfindungsgemäß erhältlichen Copolymerisate in der Regel gewichtsmittlere Molekulargewichte (M_{w}) im Bereich von 1000 bis 200000 auf. Im Hinblick auf die Verwendung der Polymerisate sind solche mit einem gewichtsmittleren Molekulargewicht von 5000 bis 100000 bevorzugt. Das gewichtsmittlere Molekulargewicht M_{w} kann in üblicher Weise durch Gelpermeationschromatographie, wie in den Beispielen erläutert, bestimmt werden. Die K-Werte der erfindungsgemäß erhältlichen Copolymerisate, bestimmt nach der unten angegebenen Methode, liegen bevorzugt im Bereich von 20 bis 45.

Wird das erfindungsgemäße Verfahren als Lösungspolymerisation in Wasser durchgeführt, so ist für viele Anwendungszwecke eine Entfernung des Wassers nicht erforderlich. Im Übrigen kann eine Isolierung des erfindungsgemäß erhältlichen Polymerisats in an sich üblicher Weise durchgeführt werden, z. B. durch Sprühtrocknung des Polymerisationsgemischs. Wird die Polymerisation in einem wasserdampfflüchtigen Lösungsmittel oder Lösungsmittelgemisch durchgeführt, so kann man das Lösungsmittel durch Einleiten von Wasserdampf entfernen, wodurch man eine wässrige Lösung oder Dispersion des Copolymerisats erhält.

Bevorzugt werden die Copolymerisate in Form einer wässrigen Dispersion oder Lösung gewonnen. Der Feststoffgehalt beträgt vorzugsweise 10 bis 80 Gew.%, insbesondere 30 bis 65 Gew.-%.

Die erfindungsgemäß erhältlichen Copolymere von (Meth)acrylsäure mit (Poly-C₂-C₄-alkylenglykol)-mono(meth)acrylsäure, insbesondere die Copolymere von Methacrylsäure mit Polyethylenglykolmono(C₁-C₁₀-alkyl)monomethacrylaten eignen sich hervorragend als Zusatzmittel für zementhaltige Zubereitungen, wie Beton oder Mörtel und zeichnen sich insbesondere durch überlegene Eigenschaften hinsichtlich ihrer verflüssigenden Wirkung aus. Daher betrifft die vorliegende Erfindung auch die nach dem erfindungsgemäßen Verfahren erhältlichen Copolymere und insbesondere Copolymere des Polyethylenglykolmono(C₁-C₁₀-alkyl)monomethacrylat mit Methacrylsäure, sowie deren Verwendung in zementhaltigen Zubereitungen, insbesondere als Betonfließmittel.

Unter Zement ist beispielsweise Portlandzement, Tonerdezement oder vermischter Zement, wie beispielsweise Puzzolanzement, Schlackenzement oder andere Typen zu verstehen. Insbesondere eignen sich die erfindungsgemäßen Copolymerisate für Zementmischungen, die als Zementbestandteile überwiegend und insbesondere zu wenigstens 80 Gew.-%, bezogen auf den Zementbestandteil, Portlandzement enthalten. Die erfindungsgemäßen Copolymere werden hierzu in der Regel in einer Menge von 0,01 bis 10 Gew.-%, vorzugsweise 0,05 bis 3 Gew.-%, bezogen auf das Gesamtgewicht des Zementes in der Zementzubereitung, eingesetzt.

Die Polymerisate können in fester Form oder als wässrige Lösung zu der gebrauchsfertigen zementhaltigen Zubereitung gegeben werden. Auch kann man in fester Form vorliegende Copolymerisate mit dem Zement formulieren und hieraus die gebrauchsfertigen zementhaltigen Zubereitungen zubereiten. Vorzugsweise wird das Copolymer in flüssiger, d. h. gelöster, emulgierter oder suspendierter Form, beispielsweise in Form der bei der Herstellung anfallenden Polymerisationslösung, bei der Herstellung der zementhaltigen Zubereitung, also beim Anmachen, eingesetzt.

Die erfindungsgemäßen Polymeren können auch in Kombination mit den bekannten Betonfließmitteln und/oder Betonverflüssigern auf Basis von Naphthalinformaldehyd-Kondensat-Sulfonat, Melaminformaldehyd-Kondensat-Sulfonat, Phenolsulfonsäure-Formaldehydkondensat, Ligninsulfonaten und Gluconaten eingesetzt werden. Weiterhin können sie zusammen mit Cellulosen, z. B. Alkyl- bzw. Hydroxyalkylcellulosen, Stärken oder Stärkederivaten eingesetzt werden. Auch können sie in Kombination mit hochmolekularen Polyethylenoxiden (gewichtsmittleres Molekulargewicht M_{w} im Bereich von 100000 bis 8000000) verwendet werden.

Weiterhin können der zementhaltigen Zubereitung übliche Additive wie Luftporenbildner, Expansionsmittel, Hydrophobiermittel, Abbindeverzögerer, Abbindebeschleuniger, Frostschutzmittel, Dichtungsmittel, Pigmente, Korrosionsinhibitoren, Fließmittel, Einpresshilfen, Stabilisierer oder Mikrohohlkugeln zugemischt werden. Solche Additive sind beispielsweise in der EN 934 beschrieben.

Grundsätzlich können die erfindungsgemäßen Polymerisate auch zusammen mit filmbildenden Polymerisaten verwendet werden. Hierunter sind solche Polymerisate zu verstehen, deren Glasübergangstemperatur ≤ 65 °C, vorzugsweise ≤ 50 °C, besonders bevorzugt ≤ 25 °C und ganz besonders bevorzugt ≤ 0 °C ist. Anhand der von Fox (T. G. Fox, Bull. Am. Phys. Soc. (Ser.II) 1, 1956, 123 aufgestellten Beziehung zwischen Glasübergangstemperatur von Homopolymerisaten und der Glasüberganstemperatur von Copolymeren ist der Fachmann in der Lage, geeignete Polymere auszuwählen. Beispiele für geeignete Polymerisate sind die für diesen Zweck im Handel befindlichen Styrol-Butadien-Polymerisate und Styrol-Acrylate (siehe z. B. H. Lutz in D. Distler (Her ausgeber), "Wässrige Polymerdispersionen", Wiley-VCH, Weinheim 1999, Kap. 10.3 und 10.4, S. 230-252).

Weiterhin ist es oftmals von Vorteil, wenn man die erfindungsgemäßen Polymerisate gemeinsam mit Antischaummitteln verendet. Hierdurch wird verhindert, dass beim Zubereiten der gebrauchsfertigen mineralischen Baustoffe zuviel Luft in Form von Luftporen in den Beton eingetragen werden, welche die Festigkeit des abgebundenen mineralischen Baustoffs herabsetzen würden. Geeignete Antischaummittel umfassen insbesondere Antirnschaummittel auf Polyalyklenoxidbasis, Trialkylphosphate, wie Tributylphosphat und Silikon-basierende Entschäumer. Ebenfalls geeignet sind die Ethoxylierungsprodukte und die Propoxylierungsprodukte von Alkoholen mit 10 bis 20 Kohlenstoffatomen. Ebenfalls geeignet sind die Diester von Alkylenglykolen bzw. Polyalkylenglykolen sowie weitere übliche Antischaummittel. Antischaummittel werden üblicherweise in Mengen von 0,05 Gew.% bis 10 Gew.% und vorzugsweise von 0,5 bis 5 Gew.-%, bezogen auf die Polymerisate, verwendet.

Die Antischaummittel können auf verschieden Weise mit dem Polymer kombiniert werden. Liegt das Polymer beispielsweise als wässrige Lösung vor, kann das Antischaummittel fest oder gelöst zu der Polymerlösung zugegeben werden. Ist das Antischaummittel in der wässrigen Polymerlösung nicht löslich, dann können Emulgatoren oder Schutzkolloide zu seiner Stabilisierung zugesetzt werden.

Liegt das erfindungsgemäße Polymerisat in Form eines Feststoffes, wie er z. B. aus einer Sprühtrocknung oder Sprühwirbelschichtgranulierung hervorgeht, so kann das Antischaummittel als Feststoff zugemischt werden oder aber beim Sprühtrocknungsprozess oder Sprühgranuiierungsprozess gemeinsam mit dem Polymeren konfektioniert werden.

Die folgenden Beispiele sollen die Erfindung verdeutlichen.

### Analytik:

### a) Bestimmung des K-Wertes:

Die K-Werte der wässrigen Natriumsalzlösungen der Copolymerisate wurden nach H. Fikentscher, Cellulose-Chemie, Band 13, 58-64 und 71-74 (1932) in wässriger Lösung bei einem pH-Wert von 7, einer Temperatur von 25 °C und einer Polymerkonzentration des Natriumsalzes des Copolymerisates von 1 Gew.-% bestimmt.

### b) Bestimmung des Feststoffgehaltes:

Die Bestimmung erfolgt mittels dem Analysengerät MA30 der Firma Satorius. Hierzu wird in eine Aluminiumschale eine definierte Menge der Probe (ca. 0,5 bis 1 g) eingewogen und bis zur Gewichtskonstanz bei 90°C getrocknet. Der prozentuale Feststoffgehalt (FG) errechnet sich wie folgt: FG = Auswaage x 100/Einwaage [Gew.-%]

### c) Molekulargewichtsbestimmung:

Die Bestimmung der zahlenmittleren und gewichtsmittleren Molekulargewichtes erfolgte durch Gel-Permeations-Chromatographie (= GPC) mit wässrigen Elutionsmitteln.

Die GPC wurde mit einer Gerätekombination der Firma Agilent (Serie 1100) durchgeführt. Diese umfasst:
- Begaser: Modell G 1322 A
- Isokratische Pumpe: Modell G 1310 A
- Autosampler: Modell G 1313 A
- Säulenofen: Modell G 1316 A
- Steuermodul: Modell G 1323 B
- Differentialrefraktometer: Modell G 1362 A

Als Eluent dient im Falle von in Wasser gelösten Polymeren ein 0,08 mol/I TRIS-Puffer (pH = 7,0) in destilliertem Wasser + 0,15 mol/I Chlorid-lonen aus NaCI und HCI.

Die Trennung fand in einer Trennsäulenkombination statt. Verwendet werden die Säulen Nr. 787 und 788 (je 8 x 30 mm) der Firma PSS mit Trennmaterial GRAL BIO linear. Die Durchflussgeschwindigkeit betrug 0,8 ml/min bei einer Säulen-Temperatur von 23 °C.

Die Kalibrierung erfolgt mit Polyethylenoxid-Standards der Fa. PPS mit Molekulargewichten von M = 194 bis 1700000 [mol/g].

### d) NMR-Analytik (Umsatzbestimmung)

Zur Bestimmung des Umsatzes des Polyalkylenglykols wurden dem Reaktionsgemischs zu verschiedenen Zeitpunkten Proben entnommen und diese mit etwas Trifluoressigsäure versetzt. Die Proben wurden mittels ¹H-NMR-Spektroskopie bei 20 °C untersucht, wobei als Referenzsignale das Signal der Endgruppe des Polyalkylenglykols diente (im Falle eines Polyalkylenglykolmethylethers das Signal bei 3,4 ppm), das für das Edukt und das Produkt zusammenfällt. Für Umsatzbestimmung wurde das Integral eines für das Reaktionsprodukt charakteristischen Signals, in der Regel das Signal der Methylenprotonen am Sauerstoff der Estergruppe (in der Regel bei etwa 4,3 ppm) bestimmt und mit dem Integral der Endgruppe ins Verhältnis gesetzt.

### B Herstellung der (Poly-C₂-C₄-alkylenglykol)-mono(meth)acrylsäureester:

### Vergleichsbeispiel 1:

In einen auf 80 °C vorgeheizten 1-I-Glasreaktor mit Ankerrührer, Thermometer, und Rückflusskühler gab man nacheinander 350 g Polyethylenglykolmonomethylether (M = 1000 g /mol), 57,74 g Methacrylsäureanhydrid, 0,315 g 2,6-Di-tert.-butyl-4-methylphenol, 0,031 g 4-Hydroxy-N,N-2,2,6,6-tetramethylpiperidin-1-oxyl und 3,50 g Triethylamin. Dann ließ man den Inhalt 6 Stunden unter Rühren bei 80 °C Innentemperatur reagieren. Dann wurden 224,43 g vollentsalztes Wasser zugegeben und weitere 5 Stunden bei 80 °C gerührt. Schließlich wurde der Reaktorinhalt abgekühlt.

Der Umsatz wurde (vor Wasserzugabe) durch ¹H-NMR-Spektrometrie kontrolliert. Hierzu wurden der Reaktionsmischung nach 60, 180 und 360 Minuten Proben (ca. 100 mg) entnommen, in 1 ml deuteriertem Chloroform unter Zusatz von 1 Tropfen Trifluoressigsäure gelöst und gemessen. Der Umsatz entspricht hierbei dem Quotienten aus der Stoffmenge des eingesetzten Polyethylenglykomonomefilylethers und der Stoffmenge des gebildeten Polyethylenglykolmonomethylethermonomethacrylats. Die Ergebnisse sind in Tabelle 1 zusammengestellt.

### Beispiel 1:

In einem 1-I-Glasreaktor mit Ankerrührer, Thermometer, Gaseinleitung, Rückflusskühler und Tropftrichter wurden 350 g Methylpolyethylenglykol (M = 1000 g/Mol), 0,315 g 2,6-Di-tert.-butyl-4-methylpenol, 31 mg 4-Hydroxy-N,N-2,2,6,6-tetramethylpiperidin-1-oxyl und 5,56 g Natriumcarbonat (wasserfrei) vorgelegt. Die Mischung wurde unter Einleitung von Luft auf 80 °C erwärmt. Dann gab man 57,74 g Methacrylsäureanhydrid zu und ließ 3 Stunden bei 80 °C reagieren. Danach wurden 225,4 g Wasser zugegeben und man ließ auf Raumtemperatur abkühlen.

Der Umsatz wurde jeweils 10, 60 und 180 Minuten nach Zugabe des Methacrylsäureanhydrids durch Probennahme nach der für das Vergleichsbeispiel 1 beschriebenen Methode bestimmt. Die Ergebnisse sind in Tabelle 1 zusammengestellt.

### Beispiel 2:

In einen 1-I-Glasreaktor mit Ankerrührer, Thermometer, Gaseinleitung, Rückflusskühler und Tropftrichter wurden 350 g Methylpolyethylenglykol (M = 4714 g/Mol), 70,0 mg 2,6-Di-tert.-butyl-4-methylpenol, 7,0 mg 4-Hydroxy-N,N-2,2,6,6-tetramethylpiperidin-1-oxyl und 1,21 g Natriumcarbonat (wasserfrei) vorgelegt. Die Mischung wurde unter Einleitung von Luft auf 80 °C erwärmt. Dann gab man 12,55 g Methacrylsäureanhydrid zu und ließ 3 Stunden bei 80 °C reagieren. Danach gab man 196,7 g Wasser zu und kühlte auf Raumtemperatur ab.

Der Umsatz wurde jeweils 15, 75 und 180 Minuten nach Zugabe des Methacrylsäureanhydrids durch Probennahme nach der für das Vergleichsbeispiel 1 beschriebenen Methode bestimmt. Die Ergebnisse sind in Tabelle 1 zusammengestellt.

### Beispiel 3:

In einen 1-I-Glasreaktor mit Ankerrührer, Thermometer, Gaseinleitung und Destillationsbrücke und Tropftrichter wurden 375 g Methylpolyethylenglykol (M = 4714 g/Mol), 37,5 g Toluol und 2,23 g 50 gew.-%ige wässrige Kalilauge vorgelegt. Man erhitzt auf 140°C innentemperatur und destillierte Toluol und Wasser unter Einleiten von Stickstoff vollständig ab. Anschließend kühlte man auf 90 °C, leitete Luft ein und gab nacheinander 2,9 mg 4-Hydroxy-N,N-2,2,6,6-tetramethylpiperidin-1-oxyl, 194,7 mg 2,6-Di-tert.-butyl-4-methylpenol und 12,88 g Methacrylsäureanhydrid zu. Man ließ drei Stunden bei 90 °C unter Rühren reagieren, überprüfte den Umsatz mittels ¹H-NMR Spektroskopie, verdünnte mit 210,30 g Wasser und kühlte auf Raumtemperatur ab.

### Beispiel 4:

In einen 1-1-Glasreaktor mit Ankerrührer, Thermometer, Gaseinleitung, Destillationsbrücke und Tropftrichter wurden 450 g Methylpolyethylenglykol (M = 1000 g/Mol), 90 g Toluol und 9,0 g 50 gew.-%ige wässrige Natronlauge vorgelegt und auf 140 °C Innentemperatur erhitzt. Unter Einleiten von Stickstoff wurde Toluol und Wasser vollständig abdestilliert. Anschließend kühlte man auf 90°C leitete Luft ein und gab nacheinander 17,7 mg 4-Hydroxy-N,N-2,2,6,6-tetramethylpiperidin-1-oxyl, 17,7 mg Cer(III)acetat und 79,78 g Methacrylsäureanhydrid zu. Man ließ drei Stunden bei 90 °C unter Rühren reagieren, überprüfte den Umsatz mittels ¹H-NMR Spektroskopie und verdünnte mit 292,50 g Wasser und kühlte auf Raumtemperatur ab.

### Beispiel 5:

In einem 1-I-Glasreaktor mit Ankerrührer, Thermometer, Gaseinleitung, Rückflusskühler und Tropftrichter wurden 350 g Methylpolyethylenglykol (M = 1000 g/Mol), 0,321 g 2,6-Di-tert.-butyl-4-methylpenol, 32,1 mg 4-Hydroxy-N,N-2,2,6,6-tetramethylpiperidin-1-oxyl und 5,56 g Natriumcarbonat (wasserfrei) vorgelegt. Die Mischung wurde unter Einleitung von Luft auf 80 °C erwärmt. Dann gab man 57,74 g Methacrylsäureanhydrid zu und ließ 3 Stunden bei 80 °C reagieren. Anschließend verdünnte man mit 226 g Wasser und kühlte auf Raumtemperatur ab.

Der Umsatz wurde jeweils 10, 60 und 180 Minuten nach Zugabe des Methacrylsäureanhydrids durch Probennahme nach der für das Vergleichsbeispiel 1 beschriebenen Methode bestimmt. Die Ergebnisse sind in Tabelle 1 zusammengestellt.

**Tabelle 1: Reaktionsumsatz in Abhängigkeit von der Zeit**

| **Vergleichsbeispiel 1** | | **Beispiel 1** | | **Beispiel 2** | | **Beispiel 5** | |
|---|---|---|---|---|---|---|---|
| Zeit [Min.] | Umsatz [%] | Zeit [Min.] | Umsatz [%] | Zeit [Min.] | Umsatz [%] | Zeit [Min.] | Umsatz [%] |
| 60 | 40 | 15 | 63 | 10 | 90 | 10 | 83 |
| 180 | 55 | 75 | 91,5 | 60 | 99 | 60 | 100 |
| 360 | 68 | 180 | > 98 | 180 | 100 | 180 | 100 |

Anhand der in Tabelle angegebenen, durch quantitative ¹H-NMR-Spektrometrie ermittelten Umsätze ist zu erkennen, dass mit dem erfindungsgemäßen Verfahren höhere Reaktionsgeschwindigkeiten und damit einhergehend höhere Ausbeuten erreicht werden. Weiterhin ist nach einer Reaktionszeit von 3 Stunden in den erfindungsgemäßen Beispielen kein Methacrylsäureanhydrid mehr nachweisbar, während im Vergleichsbeispiel auch nach 6 Stunden noch Methacrylsäureanhydrid vorhanden ist.

### C Polymerisationsverfahren

### Vergleichsbeispiel 2:

In einen 1-I-Glasreaktor mit Ankerrührer, Thermometer, Stickstoff-Einleitung, Rückflusskühler und mehreren Zulaufgefäßen legte man 359,63 g Wasser vor und erwärmte auf 80 °C. Unter Einleiten von Stickstoff wurden dann bei 80 °C Innentemperatur unter Rühren die folgenden Zuläufe 1 und 2 gleichzeitig beginnend kontinuierlich über einen Zeitraum von 4 Stunden mit gleichbleibender Zugaberate zudosiert. Zur Vervollständigung der Copolymerisation ließ man danach 1 Stunde bei 80 °C nachpolymerisieren. Anschließend kühlte man auf Raumtemperatur ab und neutralisierte die Mischung mit 50 gew.-%iger Natronlauge.

Die erhaltene Lösung hatte einen Feststoffgehalt von 34,4 Gew.% und einen pH-Wert von 6,7. Der K-Wert des Polymerisats lag bei 36,5.

Zulauf 1: Mischung aus 389,23 g der wässrigen Mischung aus Vergleichsbeispiel 1 mit 18,60 g Methacrylsäure und 2,72 g 3-Mercaptopropyltrimethoxysilan Zulauf 2: 1,90 16,0 g Ammoniumperoxodisulfat gelöst in 17,11 g Wasser.

### Polymerisationsbeispiel P1:

In einem 1-1 Glasreaktor mit Ankerrührer, Thermometer, Stickstoff-Einleitung, Rückflusskühler und mehreren Zulaufgefäßen wurden 384,75 g Wasser vorgelegt und auf 80 °C erhitzt. Unter Einleiten von Stickstoff wurden dann bei 80 °C Innentemperatur unter Rühren, gleichzeitig beginnend die Zuläufe 1 und 2 innerhalb 4 h kontinuierlich mit gle-chbleibender Zugaberate zudosiert. Um die Copolymerisation zu vervollständigen, ließ man nach Beendigung der Zuläufe noch 1 Stunde nachpolymerisieren, kühlte den Reaktorinhalt dann ab und neutralisierte mit 50%iger Natronlauge.

Die erhaltene Lösung hatte einen Feststoffgehalt von 34,1 Gew.% und einen pH-Wert von 6,8. Der K-Wert des Polymerisats lag bei 37,0.

Zulauf 1: Mischung aus 390,92 g der in Beispiel 1 erhaltenen wässrigen Lösung mit 31,58 g Methacrylsäure und 2,86 g 3-Mercaptopropyltrimethoxysilan Zulauf 2: 2,00 g Ammoniumpersulfat gelöst in 18,00 g Wasser.

### Polymerisationsbeispiel P2:

In einem 1-I Glasreaktor mit Ankerrührer, Thermometer, Stickstoff-Einleitung, Rückflusskühler und mehreren Zulaufgefäßen wurden 295,37 g Wasser vorgelegt und auf 60 °C erhitzt. Unter Einleiten von Stickstoff gab man dann bei 60 °C Innentemperatur unter Rühren, zeitgleich beginnend Zulauf 1 innerhalb 4 h und Zulauf 2 innerhalb 4,5 h kontinuierlich zu. Um die Copolymerisation zu vervollständigen ließ man nach Beendigung der Zuläufe noch 1 Stunde nachpolymerisieren, kühlte den Reaktorinhalt dann ab und neutralisierte mit 25%iger Natronlauge.

Die erhaltene Lösung hatte einen Feststoffgehalt von 29,3 Gew.% und einen pH-Wert von 6,9. Der K-Wert des Polymerisats lag bei 43,8, das zahlenmittlere Molekulargewicht Mₙ war 21000 und das gewichtsmittlere Molekulargewicht M_{w} betrug 65000 Dalton.

Zulauf 1: Mischung aus 250 g der in Beispiel 2 erhaltenen Lösung mit 10,16 g Methacrylsäure und 0,97 g Mercaptoethanol.
Zulauf 2: 24,55 g wässrige Natriumperoxodisulfat-Lösung (7 Gew.-%).

### Polymerisationsbeispiel P3:

In einem 1-I-Glasreaktor mit Ankerrührer, Thermometer, Stickstoff-Einleitung, Rückflusskühler und mehreren Zulaufgefäßen wurden 289,02 g Wasser vorgelegt und auf 60 °C erhitzt. Unter Einleiten von Stickstoff wurden dann bei 60 °C Innentemperatur unter Rühren zeitgleich beginnend Zulauf 1 innerhalb von 4 h und Zulauf 2 innerhalb von 4,5 h kontinuierlich zudosiert. Um die Copolymerisation zu vervollständigen ließ man nach Beendigung der Zuläufe noch 1 Stunde nachpolymerisieren, kühlte den Reaktorinhalt dann ab und neutralisierte mit 25%iger Natronlauge.

Die erhaltene Lösung hatte einen Feststoffgehalt von 29,6 Gew.-% und einen pH-Wert von 6,8. Der K-Wert des Polymerisats lag bei 44,1, das zahlenmittlere Molekulargewicht Mₙ war 16400 und das gewichtsmittlere Molekulargewicht M_{w} betrug 89000 Dalton.

Zulauf 1: Mischung aus 250 g der in Beispiel 2 erhaltenen Lösung mit 4,26 g Methacrylsäure und 0,41 g Mercaptoethanol.
Zulauf 2: 15,56 g wässrige Natriumperoxodisulfat-Lösung (7 Gew.-%).

### Polymerisationsbeispiel P4:

In einem 1-I-Glasreaktor mit Ankerrührer, Thermometer, Stickstoff-Einleitung, Rückflusskühler und mehreren Zulaufgefäßen wurden 216 g Wasser vorgelegt und auf 60 °C erhitzt. Unter Einleiten von Stickstoff wurden dann bei 60 °C Innentemperatur unter Rühren zeitgleich beginnend Zulauf 1 und Zulauf 2 innerhalb von 4 h kontinuierlich zudosiert. Nach Beendigung der Zuläufe dosierte man innerhalb von 1 Stunde noch einmal 0,24 g Natriumperoxodisulfat gelöst in 5,88 g Wasser zu und ließ schließlich noch 1 Stunde bei 60 °C nachpolymerisieren. Der Reaktorinhalt wurde abgekühlt und mit 50%iger Natronlauge neutralisiert.

Die erhaltene Lösung hatte einen Feststoffgehalt: von 30,0 Gew.-% und einen pH-Wert von 7,2. Der K-Wert des Polymerisats lag bei 40,3, das zahlenmittlere Molekulargewicht Mₙ war 10000 und das gewichtsmittlere Molekulargewicht M_{w} betrug 48400 Dalton.

Zulauf 1: Mischung aus 258,5 g der in Beispiel 3 erhaltenen Lösung mit 11,51 g Methacrylsäure, 0,96 g Mercaptoethanol und 77,5 g Wasser.
Zulauf 2: 1,47 g Natriumperoxodisulfat gelöst in 35,25 g Wasser.

### Polymerisationsbeispiel P5:

In einem 1-I-Glasreaktor mit Ankerrührer, Thermometer, Stickstoff-Einleitung, Rückflusskühler und mehreren Zulaufgefäßen wurden 228,16 g Wasser vorgelegt und auf 80 °C erhitzt. Unter Einleiten von Stickstoff wurden dann bei 80 °C Innentemperatur unter Rühren zeitgleich beginnend Zulauf 1 und Zulauf 2 innerhalb von 4 h kontinuierlich zudosiert. Nach Beendigung der Zuläufe dosierte man innerhalb von 1 Stunde noch einmal 0,77 g Ammoniumperoxodisulfat, gelöst in 6,90 g Wasser, zu und ließ schließlich noch 1 Stunde bei 80 °C nachpolymerisieren. Der Reaktorinhalt wurde abgekühlt und mit 30%iger Natronlauge neutralisiert.

Die erhaltene Lösung hatte einen Feststoffgehalt von 40,5 Gew.-% und einen pH-Wert von 7,0. Der K-Wert des Polymerisats lag bei 37,5, das zahlenmittlere Molekulargewicht Mₙ war 8800 und das gewichtsmittlere Molekulargewicht M_{w} betrug 39500 Dalton.

Zulauf 1: Mischung aus 395,4 g der in Beispiel 4 erhaltenen Lösung mit 45,5 g Methacrylsäure und 2,42 g Mercaptoethanol. Zulauf 2: 3,07 g Ammoniumperoxodisulfat gelöst in 27,6 g Wasser.

### Polymerisationsbeispiel P6:

In einem 1-I-Glasreaktor mit Ankerrührer, Thermometer, Stickstoff-Einleitung, Rückflusskühler und mehreren Zulaufgefäßen wurden 255 g Wasser vorgelegt und auf 100 °C (Rückfluss) erhitzt. Unter Einleiten von Stickstoff wurden dann bei 100 °C Innentemperatur unter Rühren, gleichzeitig beginnend Zulauf 1 innerhalb 5 h, und die Zuläufe 2 und 3 innerhalb 5 h 15 min. kontinuierlich zudosiert. Um die Copolymerisation zu vervollständigen ließ man nach Beendigung der Zuläufe noch 1 Stunde nachpolymerisieren, kühlte den Reaktorinhalt dann ab und neutralisierte mit 50%iger Natronlauge.

Die erhaltene Lösung hatte einen Feststoffgehalt von 40,4 Gew.-% und einen pH-Wert von 6,5. Der K-Wert des Polymerisats lag bei 36,9, das zahlenmittlere Molekulargewicht Mₙ war 8200 und das gewichtsmittlere Molekulargewicht M_{w} betrug 39500 Dalton.

Zulauf 1: Mischung aus 200 g der in Beispiel 1 erhaltenen wässrigen Lösung mit 25,25 g Methacrylsäure und 45,1 g Wasser,
Zulauf 2: 22,52 g wässrige Natriumperoxodisulfat-Lösung (15 Gew.-%),
Zulauf 3: 17,51 g wässrige Natriumhypophosphit-Lösung (45 Gew.-%).

### D Anwendungstechnische Prüfung der Polymere P1 bis P6 als Betonfließmittel:

Die Prüfung erfolgte durch das im Folgenden näher erläuterte Prüfverfahren für Betonfließmittel auf Basis der EN 196 bzw. DIN 18555 Teil 2:

### Geräte:

- Mischer Typ 203 (Fa. Testing Bluhm und Feuerhard GmbH)
- Stoppuhr
- Laborwaage (Genauigkeit +/-1 g)
- Ausbreittisch d = 300 mm (Fa. Testing Bluhm und Feuerhard GmbH)
- Setztrichter
- Tropftrichter mit Schlauchanschluss
- Löffel
- Luftporengehaltmessgerät (Fa. Testing Bluhm und Feuerhard GmbH)
- Rütteltisch Typ 2.0233 (Fa. Testing Bluhm und Feuerhard GmbH)

### Einsatzstoffe:

### Zement: Zuschlag 1:3; Sieblinie 0/2

Je 1000 g Normsand CEN 1, CEN II und CEN III;
1000 g Heidelberger Zement CEM 142.5 R (Werk Wetzlar);
440 g Wasser: Daraus ergibt sich ein Quotient von Masse Wasser und Masse Zement (W/Z) von 0,44.

Fließmittel: Das Fließmittel wird 1 d vor der Prüfung mit 0,3 %, bezogen auf die Lösung des Fließmittels, eines geeigneten Entschäumers (z. B. Degresal SD21) versetzt. Der Fließmittelzusatz wird als Festsubstanz berechnet, bezogen auf den Zementanteil. Die durch das Fließmittel zugefügte Wassermenge wird bei der Berechnung der Gesamtwassermenge zur Einstellung des W/Z- Wertes berücksichtigt.

Durchführung der Prüfung:

### a) Herstellung des Mörtels

Die gesamte Menge der Trockenmischung (Zement + Sand) wird bei ca. 23 °C 1 min. mit einem Mörtelmischer gem. DIN EN 196 homogen gemischt. Anschließend wird mittels eines Tropftrichter die Nasskomponente (Wasser und wässrige Lösung von Betonfließmittel + Entschäumer) über einen Zeitraum von ca. 15 sek. kontinuierlich zudosiert. Nach 1 Minute Nachrührzeit ist die Herstellung des Mörtels beendet.

### b) Ausbreitversuch nach DIN 18555 Teil 2

Zur Bestimmung des Ausbreitmaßes wird der Setztrichter mittig auf die Glasscheibe des Ausbreitmaßtisches gestellt, der Mörtel in drei Schichten eingefüllt und jede Schicht durch Andrücken mit dem Löffel verdichtet. Während des Einfüllens wird der Setztrichter mit einer Hand auf die Glasplatte gedrückt. Der überstehende Mörtel wird abgestrichen und die freie Fläche des Ausbreitmaßtisches wird gegebenenfalls gereinigt. Anschließend wird der Setztrichter langsam senkrecht nach oben gezogen und der Mörtel auf der Glasplatte mit 15 Hubschlägen ausgebreitet. Nun wird der Durchmesser des ausgebreiteten Mörtels in zwei rechtwinklig zueinander stehenden Richtungen gemessen. Das Ergebnis wird in cm als arithmetisches Mittel der beiden Messungen angegeben. Die Bestimmung erfolgt 5, 30, 60, und 90 Minuten nach Zugabe der Nasskomponente. Vor jeder Messung wird der Mörtel kurz mit der Hand aufgerührt.

### c) Luftgehalt des Mörtels in Anlehnung an DIN 18555 Teil 2 (Luftporen)

Der Luftgehalt des Frischmörtels wird mit einem justierten Prüfgerät von 1 dm³ Inhalt nach dem Druckausgleichsverfahren gemessen. Dazu füllt man den 1 1-Behälter des Luftporengehaltmessgerätes ohne weitere Verdichtung mit Mörtel.

Anschließend wird das Oberteil des Prüfgerätes auf den gesäuberten Schliffrand des Behälters gesetzt und das Gerät verschlossen. Das noch freie Volumen des Gerätes wird mit Wasser gefüllt. In der Kammer wird ein definierter Druck erzeugt. Nach erfolgtem Druckausgleich wird der Luftporengehalt auf der am Oberteil angebrachten Skala direkt abgelesen. Der Luftporengehalt, ausgedrückt als Volumenanteil in %, wird mit einer Messgenauigkeit von 0,1 % angegeben.

**Tabelle 2: Ergebnisse der anwendungstechnischen Prüfung**

| Polymerisationsbeispiel | Dosierung | Luftporen | Ausbreitmaß [cm] | | | |
|---|---|---|---|---|---|---|
| | Fließmittel* | [%] | 5 Min. | 30 Min. | 60 Min. | 90 Min. |
| Vergleichsbeispiel 2 | 0,2 % | 4,0 | 20.9 | 16,7 | 15,5 | 14,7 |
| Beispiel P1 | 0,2 % | n.b. | 22,9 | 21,3 | 20,3 | 17,8 |
| Beispiel P2 | 0,2 % | 3,9 | 22,5 | 20,8 | 19,7 | 18,4 |
| Beispiel P3 | 0,2 % | 4,1 | 16,9 | 16,4 | 15,6 | 14,8 |
| Beispiel P4 | 0,2 % | 4,1 | 23,0 | 19,3 | 18,7 | 17.2 |
| Beispiel P5 | 0,2 % | 3,8 | 24,1 | 20,8 | 19,5 | 17,2 |
| Beispiel P6 | 0,2 % | 3,7 | 22,2 | 18,3 | 16,8 | 15,8 |

| | | | | | | |
|---|---|---|---|---|---|---|
| * Die Angabe der Dosierung bezieht sich auf die Masse Feststoff im jeweiligen Fließmittel, bezogen auf die Masse Zement im Mörtel. | | | | | | |

Die Ergebnisse der anwendungstechnischen Prüfung (Tabelle 2) belegen, dass die erfindungsgemäßen Copolymerisate eine höhere Verflüssigung als die nach der Lehre des Standes der Technik hergestellten Produkte zeigen.

## Patentansprüche

1. Verfahren zur Herstellung von (Poly-C₂-C₄-alkylenglykol)-mono(meth)acrylsäureestern durch Umsetzung von (Meth)acryläureanhydrid A mit einer wenigstens eine OH-Gruppe tragenden Poly-C₂-C₄-alkylenglykol-Verbindung P in Gegenwart einer Base, wobei die Base ausgewählt ist unter basischen Verbindungen, die bei 90 °C eine Löslichkeit in der Poly-C₂-C₄-alkylenglykol-Verbindung P von nicht mehr als 10 g/l aufweisen und das Molverhältnis von (Meth)acrylsäureanhydrid zu Poly-C₂-C₄-alkylenglykol A:P im Bereich von 1:1 bis 1,095:1 liegt.

2. Verfahren nach Anspruch 1, wobei die basische Verbindung ausgewählt ist unter den Hydroxiden, Oxiden, Carbonaten und Hydrogencarbonaten von ein- oder zweiwertigen Metallen.

3. Verfahren nach Anspruch 1, wobei die basische Verbindung ein Alkalimetallhydroxid oder Alkalimetallcarbonat ist.

4. Verfahren nach einem der vorhergehenden Ansprüche, wobei die Base in einer Menge von 0,05 bis 0,5 Basenäquivalenten, bezogen auf die Poly-C₂-C₄-alkylenglykolverbindung P eingesetzt wird.

5. Verfahren nach einem der vorhergehenden Ansprüche, wobei man die Umsetzung von (Meth)acrylsäureanhydrid mit der Verbindung P in Gegenwart eine Polymerisationsinhibitors durchführt.

6. Verfahren nach Anspruch 5, wobei der Polymerisationsinhibitor ausgewählt ist unter sterisch gehinderten Nitroxiden, Cer(III)verbindungen und sterisch gehinderten Phenolen und deren Mischungen sowie deren Mischungen mit Sauerstoff.

7. Verfahren nach einem der vorhergehenden Ansprüche, wobei die Umsetzung in einem Reaktionsgemisch durchgeführt wird, das weniger als 0,2 Gew.-% Wasser enthält.

8. Verfahren nach einem der vorhergehenden Ansprüche, wobei man die Reaktion in Substanz durchführt.

9. Verfahren nach einem der vorhergehenden Ansprüche, wobei die Poly-C₂-C₄-alkylenglykolverbindung P ein Polyethylenglykolmono(C₁-C₁₀-alkyl)ether ist.

10. Verfahren nach einem der vorhergehenden Ansprüche, wobei die Poly-(C₂-C₄)-alkylenglykolverbindung ein zahlenmittleres Molekulargewicht im Bereich von 400 bis 10000 aufweist.

11. Verfahren zur Herstellung von Copolymeren von (Meth)acrylsäure mit Poly-(C₂-C₄-alkylenglykol)-mono(meth)acrylsäureestern umfassend:
i) Herstellung eines (Poly-C₂-C₄-alklenglykol)-mono(meth)acrylsäureesters durch Umsetzung von (Meth)acrylsäureanhydrid A mit einer wenigstens eine OH-Gruppe tragenden Poly-C₂-C₄-alkylenglykolverbindung P in Gegenwart einer Base nach einem der vorhergehenden Ansprüche, und
ii) radikalische Copolymerisation des in Schritt i) erhaltenen (Poly-C₂-C₄-alyklenglykol)-mono(meth)acrylsäureesters mit Acrylsäure und/oder Methacrylsäure und gegebenenfalls weiteren ethylenisch ungesättigten Monomeren.

12. Verfahren nach Anspruch 11, wobei das Molverhältnis von erhaltenen Poly-(C₂-C₄-alkylenglykol)-mono(meth)acrylsäureester zu (Meth)acrylsäure im Bereich von 1:1 bis 1:20 liegt.

13. Verfahren nach Anspruch 11 oder 12, wobei man die Polymerisation in Gegenwart eines Molekulargewichtsreglers durchführt.

14. Verfahren nach Anspruch 13, wobei der Molekulargewichtsregler in einer Menge von 0,05 bis 10 Gew.-%, bezogen auf die Gesamtmenge der zu polymerisierenden Monomere eingesetzt wird.

15. Verfahren nach einem der Ansprüche 11 bis 14, wobei man die Polymerisation in einem wässrigen Reaktionsmedium durchführt.

16. Verfahren nach einem der Ansprüche 11 bis 15, wobei der (Poly-C₂-C₄-alkylenglykol)mono(meth)acrylsäurester ein (Polyethylenglykolmono-C₁-C₁₀-alkylether)-monomethacrylat ist.

17. Verfahren nach einem der Ansprüche 11 bis 16, wobei der in Schritt i) erhaltene (Poly-C₂-C₄-alkylenglykol)mono(meth)acrylsäurester ohne Isolierung in Schritt ii) mit Acrylsäure und/oder Methacrylsäure und gegebenenfalls weiteren ethylenisch ungesättigten Monomeren copolymerisiert wird.

18. Copolymere von (Meth)acrylsäure mit (Poly-C₂-C₄-alkylenglykol)-mono(meth)-acrylsäureestern, erhältlich durch ein Verfahren nach einem der Ansprüche 11 bis 17.

19. Copolymere nach Anspruch 18 von (Polyethylenglykolmono-C₁-C₁₀-alkylether)-monomethacrylat mit Methacrylsäure.

20. Verwendung eines Copolymers nach Anspruch 18 oder 19 als verflüssigendes Additiv in zementhaltigen Zubereitungen.

## Claims

1. A process for the preparation of poly-C₂-C₄-alkylene glycol mono(meth)acrylic acid esters by reacting (meth)acrylic anhydride A with a poly-C₂-C₄-alkylene glycol compound P carrying at least one OH group in the presence of a base, the base being selected from basic compounds which have a solubility in the poly-C₂-C₄-alkylene glycol compound P of not more than 10 g/l at 90°C, and the molar ratio of (meth)acrylic anhydride to poly-C₂-C₄-alkylene glycol A:P being in the range from 1:1 to 1.095:1.

2. The process according to claim 1, the basic compound being selected from the hydroxides, oxides, carbonates and bicarbonates of monovalent or divalent metals.

3. The process according to claim 1, the basic compound being an alkali metal hydroxide or alkali metal carbonate.

4. The process according to any of the preceding claims, the base being used in an amount of from 0.05 to 0.5 base equivalent, based on the poly-C₂-C₄-alkylene glycol compound P.

5. The process according to any of the preceding claims, the reaction of (meth)acrylic anhydride with the compound P being carried out in the presence of a polymerization inhibitor.

6. The process according to claim 5, the polymerization inhibitor being selected from sterically hindered nitroxides, cerium(III) compounds and sterically hindered phenols and mixtures thereof and mixtures thereof with oxygen.

7. The process according to any of the preceding claims, the reaction being carried out in a reaction mixture which comprises less than 0.2% by weight of water.

8. The process according to any of the preceding claims, the reaction being carried out in the absence of a solvent.

9. The process according to any of the preceding claims, the poly-C₂-C₄-alkylene glycol compound P being a polyethylene glycol mono(C₁-C₁₀-alkyl) ether.

10. The process according to any of the preceding claims, the poly-C₂-C₄-alkylene glycol compound having a number average molecular weight in the range from 400 to 10 000.

11. A process for the preparation of copolymers of (meth)acrylic acid with poly-C₂-C₄-alkylene glycol mono(meth)acrylic acid esters, comprising:
i) preparation of a poly-C₂-C₄-alkylene glycol mono(meth)acrylic acid ester by reacting (meth)acrylic anhydride A with a poly-C₂-C₄-alkylene glycol compound P carrying at least one OH group in the presence of a base according to any of the preceding claims, and
ii) free radical copolymerization of the poly-C₂-C₄-alkylene glycol mono(meth)acrylic acid ester obtained in step i) with acrylic acid and/or methacrylic acid and, if appropriate, further ethylenically unsaturated monomers.

12. The process according to claim 11, the molar ratio of poly-C₂-C₄-alkylene glycol mono(meth)acrylic acid ester obtained to (meth)acrylic acid being in the range from 1:1 to 1:20.

13. The process according to claim 11 or 12, the polymerization being carried out in the presence of a molecular weight regulator.

14. The process according to claim 13, the molecular weight regulator being used in an amount of from 0.05 to 10% by weight, based on the total amount of the monomers to be polymerized.

15. The process according to any of claims 11 to 14, the polymerization being carried out in an aqueous reaction medium.

16. The process according to any of claims 11 to 15, the poly-C₂-C₄-alkylene glycol mono(meth)acrylic acid ester being a polyethylene glycol mono-C₁-C₁₀-alkyl ether monomethacrylate.

17. The process according to any of claims 11 to 16, the poly-C₂-C₄-alkylene glycol mono(meth)acrylic acid ester obtained in step i) being copolymerized without isolation in step ii) with acrylic acid and/or methacrylic acid and, if appropriate, further ethylenically unsaturated monomers.

18. A copolymer of (meth)acrylic acid with poly-C₂-C₄-alkylene glycol mono(meth)acrylic acid esters, obtainable by a process according to any of claims 11 to 17.

19. The copolymer according to claim 18 of polyethylene glycol mono-C₁-C₁₀-alkyl ether monomethacrylate with methacrylic acid.

20. The use of a copolymer according to claim 18 or 19 as a plasticizing additive in cement-containing preparations.

## Revendications

1. Procédé pour la préparation d'esters d'acide (polyalkylèneglycol en C₂-C₄) -mono (méth) acrylique par réaction d'anhydride (méth)acrylique A avec au moins un composé P de polyalkylèneglycol en C₂-C₄ portant un groupe OH en présence d'une base, dans lequel la base est sélectionnée parmi des composés basiques qui présentent à 90°C une solubilité non supérieure à 10 g/l dans le composé P de polyalkylèneglycol en C₂-C₄ et le rapport molaire de l'anhydride (méth)acrylique par rapport au polyalkylèneglycol en C₂-C₄ A:P se situe dans la plage de 1:1 à 1,095:1.

2. Procédé suivant la revendication 1, dans lequel le composé basique est sélectionné parmi les hydroxydes, oxydes, carbonates et hydrogéno-carbonates de métaux monovalents ou bivalents.

3. Procédé suivant la revendication 1, dans lequel le composé basique est un hydroxyde de métal alcalin ou un carbonate de métal alcalin.

4. Procédé suivant l'une quelconque des revendications précédentes, dans lequel la base est mise en oeuvre dans une quantité de 0,05 à 0,5 équivalent basique par rapport au composé P de polyalkylèneglycol en C₂-C₄.

5. Procédé suivant l'une quelconque des revendications précédentes, dans lequel la réaction de l'anhydride (méth)acrylique avec le composé P est effectuée en présence d'un inhibiteur de polymérisation.

6. Procédé suivant la revendication 5, dans lequel l'inhibiteur de polymérisation est sélectionné parmi des nitroxydes à inhibition stérique, des composés de Cer(III) et des phénols à inhibition stérique et leurs mélanges, de même que leurs mélanges avec de l'oxygène.

7. Procédé suivant l'une quelconque des revendications précédentes, dans lequel la réaction est effectuée dans un mélange réactionnel qui comprend moins de 0,2 % en poids d'eau.

8. Procédé suivant l'une quelconque des revendications précédentes, dans lequel la réaction est effectuée en substance.

9. Procédé suivant l'une quelconque des revendications précédentes, dans lequel le composé P de polyalkylèneglycol en C₂-C₄ est un (alkyl)éther en C₁-C₁₀ de mono-polyéthylèneglycol.

10. Procédé suivant l'une quelconque des revendications précédentes, dans lequel le composé de polyalkylèneglycol en C₂-C₄ présente un poids moléculaire moyen dans la plage de 400 à 10 000.

11. Procédé pour la préparation de copolymères d'acide (méth)acrylique avec des esters d'acide (polyalkylèneglycol en C₂-C₄)-mono(méth)acrylique, comprenant .
i) la préparation d'un ester d'acide (polyalkylèneglycol en C₂-C₄)-mono (méth) acrylique par réaction d'anhydride (méth)acrylique A avec au moins un composé P de polyalkylèneglycol en C₂-C₄ portant un groupe OH en présence d'une base selon l'une des revendications précédentes, et
ii) la copolymérisation radicalaire de l'ester d'acide (polyalkylèneglycol en C₂-C₄)-mono-(méth)acrylique obtenu dans l'étape i) avec de l'acide acrylique et/ou de l'acide méthacrylique et, le cas échéant, d'autres monomères éthyléniquement insaturés.

12. Procédé suivant la revendication 11, dans lequel le rapport molaire d'esters de l'acide (polyalkylèneglycol en C₂-C₄)-mono(méth)acrylique obtenu à l'acide (méth)acrylique se situe dans la plage de 1:1 à 1:20.

13. Procédé suivant la revendication 11 ou 12, dans lequel la polymérisation est effectuée en présence d'un régulateur du poids moléculaire.

14. Procédé suivant la revendication 13, dans lequel le régulateur du poids moléculaire est mis en oeuvre dans une quantité de 0,05 à 10 % en poids par rapport à la quantité totale des monomères à polymériser.

15. Procédé suivant l'une des revendications 11 à 14, dans lequel la polymérisation est effectuée dans un milieu réactionnel aqueux.

16. Procédé suivant l'une des revendications 11 à 15, dans lequel l'ester de l'acide (polyalkylèneglycol en C₂-C₄)-mono(méth)acrylique est un monométhacrylate de (polyéthylèneglycol-monoalkyléther en C₁-C₁₀) .

17. Procédé suivant l'une des revendications 11 à 16, dans lequel l'ester de l'acide (polyalkylèneglycol en C₂-C₄) -mono (méth) acrylique obtenu au cours de l'étape i) est copolymérisé sans isolation dans l'étape ii) au moyen d'acide acrylique et/ou d'acide méthacrylique et, le cas échéant, d'autres monomères éthyléniquement insaturés.

18. Copolymères de l'acide (méth)acrylique avec des esters de l'acide (polyalkylèneglycol en C₂-C₄)-mono(méth)acrylique, qui peuvent être obtenus par un procédé suivant l'une des revendications 11 à 17.

19. Copolymères suivant la revendication 18 de monométhacrylate de (polyéthylèneglycol-mono-alkyléther en C₁-C₁₀) avec de l'acide méthacrylique.

20. Utilisation d'un copolymère suivant la revendication 18 ou 19 comme additif fluidifiant dans des préparations contenant du ciment.
